# EUROPÄISCHE PATENTANMELDUNG

(11) **EP 1 467 203 A1**
(43) Veröffentlichungstag der Anmeldung: **13.10.2004**
(21) Anmeldenummer: 03008376.0
(22) Anmeldetag: 10.04.2003
(51) Int. Cl.: G01N 29/26

(54) **Vorrichtung und Verfahren zur Messung eines extrudierten Flachleiterkabels**

(71) Anmelder: ZUMBACH ELECTRONIC AG, CH-2552 Orpund (CH)
(72) Erfinder: Bracher, Erhard, 2504 Biel (CH); Guerne, Frédéric, 2608 Courtelary (CH)
(74) Vertreter: Köster, Hajo, Dr.

(57) **Zusammenfassung**

Bereitgestellt wird eine Vorrichtung zur Messung mindestens eines Parameters eines extrudierten Flachleiterkabels (6) in einem Wasserbad (19) im Anschluss an den Extruder (19). Diese Vorrichtung zeichnet sich dadurch aus, dass das Flachleiterkabel (6) mit einer seiner flachen Seiten im wesentlichen senkrecht über einen im Wasserbad (19) angeordneten Ultraschallkopf (2, 2', 2") geführt wird und a) der Ultraschallkopf (2, 2') einen quer zur Längsrichtung (5) verschiebbar geführten Ultraschallkopf (2, 2') darstellt, oder b) der Ultraschallkopf (2") eine sich quer zur Längsrichtung (5) des Flachleiterkabels (6) erstreckende, stationäre Ultraschall-Elementenzeile (2") darstellt. Mit dieser Vorrichtung kann das Flachleiterkabel (6) über seine gesamte Breite vermessen werden, so dass verschiedene Parameter bestimmt werden können.

## Beschreibung

Die Erfindung betrifft eine Vorrichtung sowie ein Verfahren zur Messung mindestens eines Parameters eines extrudierten Flachleiterkabels in einem Wasserbad im Anschluss an den Extruder.

Es sind bereits zahlreiche Vorrichtungen bekannt, mit denen verschiedene Parameter von Kabeln vermessen und bestimmt werden können.

So ist es beispielsweise möglich, den Außendurchmesser auf optische Weise zu bestimmen. Auch können Kabel mit Röntgenstrahlen durchleuchtet werden, um die Verteilung in Querrichtung zu bestimmen.

Ferner ist es schon bekannt, die Wanddicke von isolierten Strängen zu vermessen und diese Daten zur Regelung des Herstellungsprozesses heranzuziehen. Diesbezüglich wird beispielsweise verwiesen auf die DE 25 17 709. Auch aus der CH 667327 A5 ist eine Vorrichtung und ein Verfahren zur Prüfung der Wandstärke einer isolierenden Schicht bekannt.

Eine weitere Vorrichtung zur Bestimmung der Position eines Leiters relativ zur Außenfläche einer extrudierten Umhüllung ist aus der EP-A 0 612 975 bekannt.

Diese bekannten Vorrichtungen bedienen sich verschiedener Messtechniken zur Bestimmung der gewünschten Parameter. So kann beispielsweise mit Hilfe einer induktiven Messung die Wandstärke ermittelt werden. Allerdings ist mit einer derartigen Messtechnik auch nur die Isolationswandstärke bestimmbar. Zudem ist eine derartige Messung stark von den Leiterdimensionen, beispielsweise Breite und Dicke, abhängig. Ferner muss der Sensor das Kabel berühren.

Die auch bereits mehrfach eingesetzte kapazitive Messung ist vergleichbar mit einer induktiven Messung. Bei der kapazitiven Messung müssen die Leiter geerdet sein.

Auch die Ultraschallmessung wurde schon zur Bestimmung verschiedener Parameter, beispielsweise der Wandstärke, von Platten und Rohren eingesetzt. Dies gilt auch für die Isolation von Kabeln, bei denen es sich jedoch um runde Kabel handelt.

Runde Kabel werden jedoch heutzutage immer mehr durch Flachleiterkabel ersetzt. Dies gilt beispielsweise für die Autoindustrie. Dort wurden Flachkabel bisher primär dadurch hergestellt, dass die Isolationsschicht auf die Flachleiter im Kabel auflaminiert bzw. geklebt wurden. Derartige Flachleiterkabel werden jedoch immer mehr durch Extrudieren hergestellt. Dabei ergeben sich allerdings Probleme hinsichtlich der präzisen Verlegung, beispielsweise Abstände und Zentrizität, der Flachleiter im Kabel.

Aufgabe der vorliegenden Erfindung ist es daher, eine Vorrichtung und ein Verfahren bereitzustellen, mit der bzw. mit dem die gewünschten Parameter, beispielsweise die Isolationswandstärke sowie die Lage und die Abstände der einzelnen Flachleiter, eines extrudierten Flachleiterkabels bestimmt werden können.

Gelöst wird diese Aufgabe durch die Lehre der unabhängigen Ansprüche.

Bei der erfindungsgemäßen Vorrichtung wird das Flachleiterkabel (nachstehend häufig auch nur als Kabel bezeichnet) mit einer seiner flachen Seiten im wesentlichen senkrecht über mindestens einen in einem Wasserbad angeordneten Ultraschallkopf geführt. Bei dem Wasserbad handelt es sich vorzugsweise um dasjenige, das üblicherweise bei der Herstellung von Flachleiterkabeln mittels Extrusion sich an den Extruder anschließt und ein Kühlbad darstellt. Bedingt dadurch, dass die Ultraschallmessung in einem Wasserbad stattfindet, wird der Ultraschall angekoppelt; dieses Phänomen ist bekannt.

Als Ultraschallkopf können erfindungsgemäß zwei Alternativen eingesetzt werden.

Bei der ersten Alternative wird der Ultraschallkopf derart in der Vorrichtung angebracht und geführt, dass er quer zur Längsrichtung des Flachleiterkabels verschiebbar geführt wird. Bei dieser Alternative können auch mehrere Ultraschallköpfe eingesetzt werden, die dann alle quer zur Längsrichtung des Flachleiterkabels verschiebbar geführt werden. Die obige Angabe "mindestens ein Ultraschallkopf" steht somit für ein, zwei, drei, vier, fünf ..........viele Ultraschallköpfe.

Bei der zweiten Alternative stellt der Ultraschallkopf eine stationäre Ultraschall-Elementenzeile dar, die sich quer zur Längsrichtung des Flachleiterkabels erstreckt. Mit anderen Worten, der Ultraschallkopf besitzt mehrere nebeneinander angeordnete Elemente, die zur Abgabe von Ultraschallimpulsen und gegebenenfalls auch zum Empfang von Ultraschallechos befähigt sind, worauf nachstehend noch näher eingegangen wird.

Ultraschallköpfe werden üblicherweise durch einen sehr kurzen elektrischen Spannungsimpuls zum Aussenden eines Ultraschallimpulses angeregt. Die aus dem angekoppelten Medium auf den Ultraschall-Empfänger auftreffenden Ultraschallwellen können in elektrische Spannungen umgewandelt werden. Ein Ultraschallkopf kann somit sowohl als eigentlicher Sender als auch Empfänger genutzt werden. Im Rahmen der hier vorliegenden Unterlagen wird als reiner Ultraschallsender eine solche Einrichtung bezeichnet, die lediglich zum Aussenden eines Ultraschallimpulses dient, während als Empfänger nur eine solche Einheit bezeichnet wird, die lediglich zur Umwandlung der Ultraschallwellen in elektrische Spannungen dient.

Ein und dieselbe Einrichtung kann jedoch sowohl als Sender als auch als Empfänger genutzt werden. Eine solche Einrichtung wird hier als Ultraschallwandler bezeichnet; derartige Wandler können auch Transducer genannt werden.

Aus Gründen der einfacheren Darstellbarkeit bezeichnet der Ausdruck "Ultraschallkopf" nachstehend sowohl einen reinen Ultraschallsender als auch einen Ultraschallwandler. Beziehen sich die Ausführungen auf einen reinen Ultraschallsender, dann ist diesem auf der anderen flachen Seite des Kabels gegenüberliegend ein Ultraschallempfänger zugeordnet. Der reine Ultraschallsender und der Ultraschallempfänger bilden dann ein Paar, das im Falle eines verschiebbaren Ultraschallkopfes auch gemeinsam verschoben wird.

Aufgrund der Ausgestaltung der erfindungsgemäßen Vorrichtung ist es möglich, mehrere Parameter zu bestimmen. Dazu zählen nicht nur die Isolationswandstärken sondern auch die Lage und Abstände der einzelnen Flachleiter sowie die Zwischenräume zwischen diesen Flachleitern. Es kann bzw. können nur ein verschiebbarer Ultraschallkopf oder auch mehrere, beispielsweise 2, 3, 4 etc., verschiebbare Ultraschallköpfe vorhanden sein.

Um die genaue seitliche Querverschiebung und somit die genaue relative Lage des Ultraschallkopfes oder der Ultraschallköpfe in Bezug auf das zu vermessende Flachleiterkabel genau bestimmen zu können, sollten die Seitenränder und somit die Außenkontur des zu vermessenden Flachleiterkabels entweder bekannt und somit festgelegt sein oder gemessen werden. Die Lage des Flachleiterkabels kann beispielsweise dadurch festgelegt werden, dass dieses durch eine Führung gezogen wird, so dass die Lage und damit die Außenkontur des Kabels feststeht. Vorzugsweise besitzt die erfindungsgemäße Vorrichtung jedoch eine zusätzliche Messvorrichtung, welche eine Seitenkante des Flachleiterkabels erfasst und vermisst. Zweckmäßigerweise gilt analoges für die andere Seitenkante, wobei damit auf einfache Weise die gesamte Kabelbreite gemessen werden kann. Bei dieser Messvorrichtung handelt es sich vorzugsweise ebenfalls um eine Ultraschall-Messvorrichtung.

Ferner ist der verschiebbare Ultraschallkopf oder sind die verschiebbaren Ultraschallköpfe vorzugsweise mit einem Positionsgeber ausgestattet, welcher die seitliche Querverschiebung des Ultraschallkopfes laufend erfasst, so dass die Echosignale in Funktion der relativen Lage des Ultraschallkopfes in Bezug auf die Außenkontur des Kabels laufend ermittelt wird.

Im Falle eines verschiebbar geführten Ultraschallkopfes besitzt die einfachste Ausführungsform der erfindungsgemäßen Vorrichtung nur einen einzigen derartigen verschiebbaren Ultraschallkopf. Der Ultraschallkopf sollte dann jedoch über die gesamte Breite des Flachleiterkabels verschiebbar geführt sein, um alle gewünschten Parameter bestimmen zu können.

Natürlich ist es auch möglich, mehrere verschiebbare Ultraschallköpfe zur Anwendung zu bringen. In diesem Falle sind die Ultraschallköpfe zweckmäßigerweise in Längsrichtung des Flachleiterkabels versetzt angeordnet und überstreichen nur einen gewissen Betrag der gesamten Breite des Flachleiterkabels, beispielsweise nur jeweils eine Hälfte.

Der Ausdruck "mehrere" Ultraschallköpfe bezeichnet im Rahmen der vorliegenden Unterlagen zwei, drei, vier ... viele Ultraschallköpfe.

Es ist allerdings möglich, mehrere verschiebbare Ultraschallköpfe vorzusehen und diese nebeneinander anzuordnen, so dass sie in Längsrichtung nicht versetzt sind. In diesem Fall werden die Ultraschallköpfe vorzugsweise gleichzeitig verschoben, jedoch zeitlich nacheinander angesteuert, so dass auch die Ultraschallimpulse zeitlich versetzt abgegeben werden. Sie können beispielsweise fest auf einem Schlitten befestigt sein, der als solcher verschiebbar ist, so dass auch die Ultraschallköpfe verschiebbar sind. Auch ein einzelner verschiebbarer Ultraschallkopf wird vorzugsweise auf einem derartigen Schlitten angebracht.

Besitzt die erfindungsgemäße Vorrichtung mehrere verschiebbare Ultraschallköpfe, die nicht gemeinsam sondern unabhängig voneinander verschoben werden können, dann kann man den Verschiebeweg und somit die Breite des Flachleiterkabels, die von dem einzelnen Ultraschallkopf überstrichen wird, entsprechend den Bedürfnissen wählen. Auch in diesem Fall kann man zwei oder mehrere in Längsrichtung nacheinander angeordnete Ultraschallköpfe vorsehen. Ferner ist es möglich, den Verschiebeweg derart zu wählen, dass bestimmte Bereiche der Breite und auch die gesamte Breite des Flachleiterkabels mehrmals überstrichen und vermessen werden. All dies kann je nach Wunsch und Erfordernis entsprechend ausgestaltet sein.

Statt eines verschiebbaren Ultraschallkopfes kann auch eine stationäre Ultraschall-Elementenzeile eingesetzt werden. Die Breite dieses Ultraschall-Elementenzeile ist dabei derart bemessen, dass die gewünschte Breite des Flachleiterkabels vermessen werden kann. Bei einer Ausführungsform dieser Ultraschall-Elementenzeile erstreckt sich diese vorzugsweise über die gesamte Breite des Flachleiterkabels. Es ist auch möglich, zwei getrennte stationäre Ultraschall-Elementenzeilen einzusetzen, die beispielsweise in Längsrichtung des Flachleiterkabels versetzt angeordnet sind und sich nur über einen bestimmten Bereich der Breite des Flachleiterkabels erstrecken. Auch in diesem Falle werden die Ultraschall-Elementenzeilen vorzugsweise derart ausgestaltet und angebracht, dass die gesamte Breite des Flachleiterkabels überstrichen und somit vermessen werden kann.

Den hier in Rede stehenden Alternativen liegt die gemeinsame erfinderische Idee zugrunde, dass ein Flachleiterkabel mit Hilfe mindestens eines Ultraschallkopfes über zumindest einen gewissen Bereich der Breite und vorzugsweise über die gesamte Breite vermessen wird.

Nach einer weiterhin bevorzugten Ausführungsform ist die erfindungsgemäße Vorrichtung mit einer Führungseinrichtung ausgestattet, die über einen Innenraum verfügt. Diese Führungseinrichtung ist im Wasserbad angeordnet, so dass auch der Innenraum mit Wasser gefüllt ist.

Diese Führungseinrichtung ist mit einem Schlitz versehen, über den das Flachleiterkabel geführt wird, und zwar entweder berührend oder in geringem Abstand. Unter einem geringen Abstand wird dabei ein Betrag von 0,1 - 10 mm verstanden. Diese Führungseinrichtung wird derart angeordnet, dass sich der Schlitz quer zur Längsrichtung des Flachleiterkabels erstreckt.

Im Innenraum dieser Führungseinrichtung ist ein Ultraschallkopf angeordnet, der die Ultraschallwellen in Richtung des Schlitzes abstrahlt. Nur die durch den Schlitz austretenden Schallwellen dienen zur Vermessung der gewünschten Parameter des Flachleiterkabels.

Vorzugsweise wird erfindungsgemäß als Ultraschallkopf bzw. Ultraschallwandler ein solcher mit Fokussieroptik verwendet, welche den Schall auf einen bestimmten Fokuspunkt bündelt. Der Abstand wird dann derart gewählt, dass der Fokus direkt auf der Kabeloberfläche liegt.

Nach einer weiterhin bevorzugten Ausführungsform ist die Führungseinrichtung im wesentlichen bis auf den Schlitz geschlossen und mit einer Zuführungsöffnung ausgestattet, durch die Wasser zwangsweise in den Innenraum der Führungseinrichtung eingeleitet wird. Dafür kann beispielsweise eine Pumpe eingesetzt werden. Das in den Innenraum eingeführte Wasser wird, da dieser Innenraum ansonsten geschlossen ist, aus dem Schlitz herausgedrückt und bildet damit eine Art Kissen, auf dem das Flachleiterkabel beim Ziehen über diesen Schlitz ruht. Mit Hilfe dieses Wasserkissens, beispielsweise durch Einstellen des Fördervolumens des Wassers, kann der Abstand des Flachleiterkabels zur Führungseinrichtung festgelegt werden. Dadurch wird die Genauigkeit der Ultraschallmessung nochmals verbessert.

Gegenstand der Erfindung ist auch Verfahren zur Messung mindestens eines Parameters eines extrudierten Flachleiterkabels, bei dem das Flachleiterkabel nach Austritt aus einem Extruder in einem Wasserbad vermessen wird. Diese Verfahren zeichnet sich dadurch aus, dass das Flachleiterkabel auf mindestens einer seiner beiden flachen Seiten im wesentlichen senkrecht mit den Schallwellen mindestens eines Ultraschallkopfes beaufschlagt wird und
a) als Ultraschallkopf ein solcher eingesetzt wird, der quer zur Längsrichtung des Flachleiterkabels verschoben wird, oder
b) als Ultraschallkopf eine sich über die Breite des Flachleiterkabels erstreckende, stationäre Ultraschall-Elementenzeile eingesetzt wird, und der zu messende Parameter oder die zu messenden Parameter an Hand eines reflektierten oder mehrerer reflektierter Ultraschall-Echos ermittelt wird oder werden.

Vorzugsweise wird das reflektierte Ultraschall-Echo als A-Scan bzw. als Amplitudenbild ausgewertet und in Funktion der Querrichtung des Flachleiterkabels dargestellt wird. Die mit Hilfe des erfindungsgemäßen Verfahrens ermittelten Parameter können zur Steuerung des Herstellungsverfahrens dienen.

Die Erfindung wird nachstehend anhand der folgenden Zeichnungen erläutert, welche bevorzugte Ausführungsformen in nicht maßstabsgetreuer sowie schematischer Weise darstellen.

Von den Zeichnungen zeigen:
- Figur 1: eine schematische Darstellung eines Flachleiterkabels,
- Figur 2: eine schematische Darstellung einer Extrudiervorrichtung für das in der Figur 1 gezeigte Flachleiterkabel mit integrierter erfindungsgemäßer Vorrichtung,
- Figur 3: eine Schnittansicht eines Ultraschallkopfes und eines Flachleiterkabels mit den sich ergebenden Echosignalen,
- Figur 4: eine schematische Querschnittsansicht durch ein Flachleiterkabel mit den Parametern, welche mit Hilfe der erfindungsgemäßen Vorrichtung bestimmt werden können,
- Figur 5: eine schematische Querschnittsansicht durch einen Wassertrog mit eingebauter erfindungsgemäßer Vorrichtung,
- Figur 6: eine perspektivische Ansicht einer Führungseinrichtung der erfindungsgemäßen Vorrichtung mit verschiebbarem Ultraschallkopf,
- Figur 7: eine Funktionsaufsicht auf die in der Figur 6 gezeigte Führungseinrichtung von oben,
- Figur 8: eine der Figur 6 analoge Ansicht mit einem Ultraschallkopf in Form einer Ultraschall-Elementenzeile,
- Figur 9: eine der Figur 7 analoge Ansicht,
- Figur 10: eine perspektivische schematische Ansicht einer weiteren Ausführungsform mit zwei einander gegenüberliegend angeordneten Führungseinrichtungen,
- Figur 11: eine der Figur 10 analoge Ansicht, wobei jedoch die beiden Führungseinrichtungen in Längsrichtung des Flachleiterkabels versetzt angeordnet sind,
- Figur 12: ein Diagramm eines Echosignals, das beim Vermessen des darunter schematisch dargestellten Flachleiterkabels erhalten wird und
- Figur 13: ein Diagramm verschiedener Echosignale, die beim Vermessen des darüber wiedergegebenen Flachleiterkabels erhalten werden.

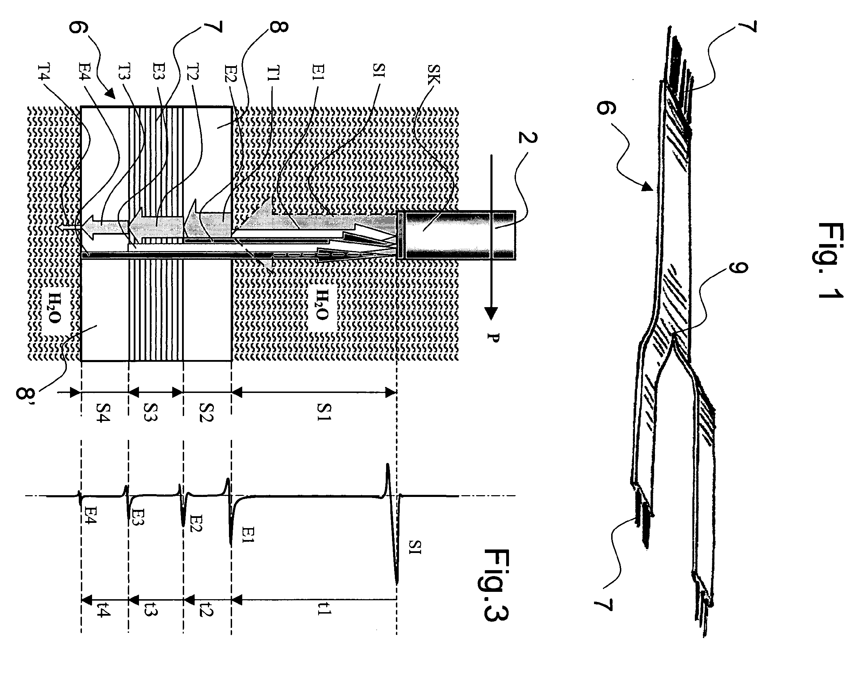

Figur 1 zeigt in perspektivische Ansicht ein übliches Flachleiterkabel 6 mit mehreren Flachleitern 7, die in eine isolierende Kunststoffschicht, die auch als Isolationsschicht bezeichnet werden kann, eingebettet sind. Das Kabel 6 ist mit einem Trennschnitt 9 versehen, an dem das Kabel 6 nach der Herstellung in zwei Teile unterteilt werden kann. Zur Herstellung des in der Figur 1 gezeigten Kabels 6 dient der in der Figur 2 schematisch und in vereinfachter Weise gezeigte Extruder 10, der mit einer Extruderdüse 28 ausgestattet ist, der mehrere Flachleiter 7 zugeführt werden. In der Extruderdüse 28 werden diese Flachleiter 7 in ein Kunststoffmaterial eingebettet und zusammen damit als Flachleiterkabel 6 extrudiert. Das Kunststoffmaterial wird in einen Trichter 29 eingefüllt und dann auf bekannte Weise erhitzt und der Extruderdüse 28 zugeführt.

Nach dem Verlassen der Extruderdüse 28 wird das Kabel 6 in ein Kühlbad 30 geführt und dort mit Hilfe von Wasser gekühlt. Am Anfang dieses Kühlbades 30 bzw. der Kühlstrecke ist die erfindungsgemäße Vorrichtung 1 angeordnet.

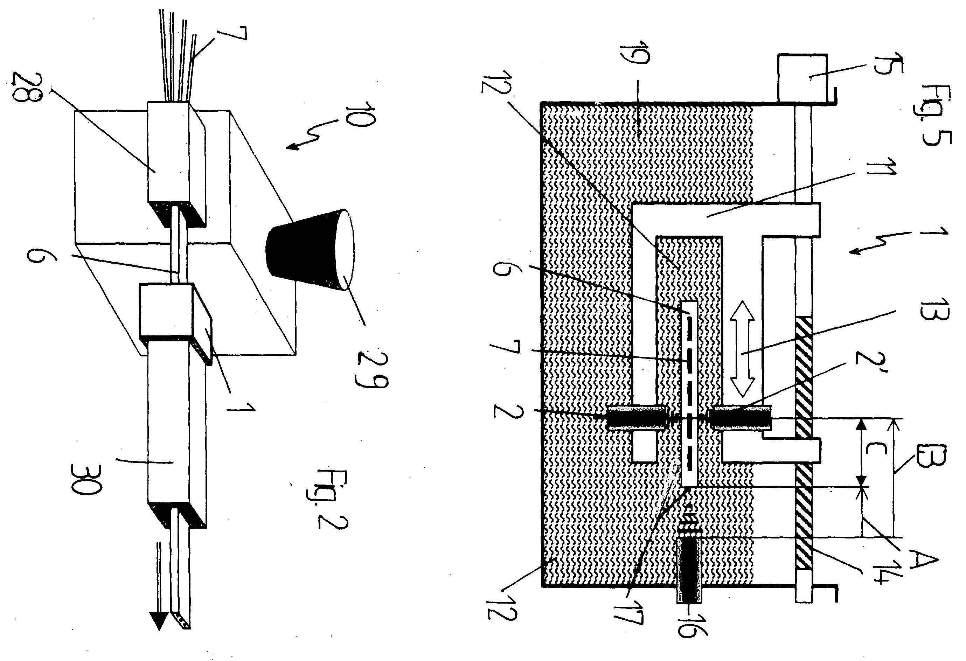

Zum Vermessen des Kabels 6 dient ein Ultraschallkopf 2; die Situation mit einem Ultraschallkopf 2, der sich über einem der Flachleiter 7 in dem Flachleiterkabel 6 befindet, ist in der Figur 3 schematisch dargestellt. Das Kabel 6 befindet sich in einem Wasserbad und wird über den Ultraschallkopf 2 gezogen. Der von dem Ultraschallkopf 2 ausgesandte Ultraschallimpuls läuft in Richtung des Flachleiterkabels 6 und wird dort an den verschiedenen Grenzflächen reflektiert. Die erste Reflexion findet dabei an der Grenzfläche zwischen dem Wasser und der oberen Außenmantelfläche des Flachleiterkabels 6 statt. Das an dieser Grenzfläche gebildete erste Ultraschallecho E1 läuft zurück zum Ultraschallkopf 2 und wird dort registriert; in diesem Fall stellt der Ultraschallkopf 2 somit einen Ultraschallwandler dar.

Ultraschallechos lassen sich auf verschiedene Weise, beispielsweise auf einem Oszillographen oder einem Computerbildschirm darstellen. Dies ist in der Figur 3 auf der rechten Seite dargestellt. Der ausgestrahlte Ultraschallimpuls wird als SI dargestellt. Das erste Ultraschallecho E1 wird nach der Echo-Laufzeit t1 erhalten.

Das zweite Ultraschallecho E2 des von dem Ultraschallkopf 3 abgegebenen Ultraschallimpulses entsteht an der Grenzfläche zwischen der oberen Isolationsschicht 8 und dem Flachleiter 7; diesem zweiten Ultraschallecho E2 ist die Echo-Laufzeit t2 zugeordnet.

Ein weiteres Ultraschallecho E3 ergibt sich an der Grenzfläche zwischen der unteren Grenzschicht des Flachleiters 7 und der oberen Grenzschicht der darunter angeordneten Isolationsschicht 8'; die Echo-Laufzeit ist mit t3 bezeichnet. Das vierte Ultraschallecho E4 entsteht an der Grenzfläche zwischen der unteren Isolationsschicht 8' des Kabels 6 und dem darunter liegenden Wasser.

Bekanntlich werden Ultraschallechos an Grenzflächen durch Reflexion erzeugt, an denen Stoffe mit unterschiedlicher akustischer Impedanz aufeinander treffen. Derartige Stoffe sind im vorliegenden Fall einerseits das Material der Isolationsschicht 8 und andererseits das Material des Flachleiters 7. Änderungen oder Sprünge der akustischen Impedanz an Grenzflächen längs der Ausbreitungsrichtung führen zu einer teilweisen Reflexion der akustischen Energie und damit gleichzeitig zu einer Schwächung in Ausbreitungsrichtung. Der ursprünglich abgegebene Ultraschallimpuls ist in der Figur 3 als SI bezeichnet. Nach der Reflexion an der ersten Grenzschicht und Ausbildung des Ultraschallechos E1 wird der ursprüngliche Ultraschallimpuls SI geschwächt und setzt sich in geschwächter Form als T1 fort. Analoges gilt für die weiterhin geschwächten Ultraschallimpulse T2, T3 und T4.

Bei der erfindungsgemäßen Vorrichtung erfolgt die Vermessung mit Hilfe des sogenannten A-Bildes (Amplituden-Bild), das auch als A-Scann bezeichnet wird. Der zeitliche Ablauf der Ultraschallimpulse und der rückgestreuten Ultraschallechos werden in einem Signalprozessor in Echtzeit vermessen und ausgewertet. Das erhaltene Resultat kann in leicht lesbarer grafischer Form auf einem Bildschirm dargestellt werden. Dabei sind auf einer Achse die in eine Dimension umgerechneten Echozeiten als reelle Distanzen und auf der anderen Achse die Position des aktiven Ultraschallkopfes dargestellt, und zwar in Querrichtung und relativ zur Referenzkante des Flachleiterkabels. Auf diese Weise entsteht ein klar lesbares virtuelles Bild des betreffenden Kabelquerschnitts; diese Situation ist rechts in der Figur 3 bildlich erläutert. Die vertikale Position entspricht der Echo-Laufzeit (d. h. der Eindringtiefe) und die Amplitude der Echointensität.

In der Figur 3 und in obigen Ausführungen sind nur die wichtigsten Ultraschallechos erläutert. Daneben existieren noch weitere Echos, beispielsweise Bodenechos.

In der Figur 4 ist ein Kabel 6 in einem schematischen Schnitt gezeigt. In die Isolationsschicht 8 dieses Kabels 6 sind insgesamt drei Flachleiter 7 eingebettet; zudem weist dieses Kabel einen Trennschnitt 9 auf. In dieser Figur sind verschiedene Parameter dargestellt, die mit Hilfe der erfindungsgemäßen Vorrichtung und dem erfindungsgemäßen Verfahren vermessen werden können. Dies sind unter anderem:

BL = Breite des Leiters; HL = Höhe des Leiters; DL = Abstand der benachbarten Seitenkanten von zwei Flachleitern 7; DS = Abstand des Seitenrandes des äußeren bzw. mittleren Flachleiters 7 zum Trennschnitt 9; H = Dicke des Flachleiterkabels 6; HL = Dicke/Höhe des Flachleiters 7 und DM = Abstand der Längsmittellinien zweier benachbarter Flachleiter 7.

Figur 5 zeigt eine schematische Schnittansicht durch ein Wasserbad 19 mit einer integrierten erfindungsgemäßen Vorrichtung 1. Der Schnitt verläuft dabei in etwa senkrecht zu der Längsachse des zu vermessenden Flachleiterkabels 6, das insgesamt fünf Flachleiter 7 aufweist. Das Flachleiterkabel 6 wird durch eine in etwa C-förmige, zur Seite hin (in Figur 5 nach rechts hin) offene und mit Wasser gefüllte Ausnehmung 12 in einem Schlitten 11 hindurchgezogen.

Der Schlitten 11 kann quer zur Längsrichtung des Kabels 6 und somit in Richtung des Doppelpfeils 13 hin- und herbewegt werden. Diese Bewegung wird mit Hilfe einer Spindel 14 bewirkt, die durch einen Antrieb 15, beispielsweise DC-Motor, angetrieben wird, der mit einem Encoder für die Positionserfassung des Schlittens 11 und damit auch der nachstehend näher erläuterten Ultraschallköpfe 2, 2' ausgestattet ist. Stattdessen kann auch ein Schrittmotor eingesetzt werden, dessen Position durch die Ansteuerung eindeutig bestimmt ist. Antrieb und Spindel können auch durch eine Pneumatikzylinder ersetzt werden.

Der Ultraschallkopf 2 ist unter dem Kabel 6 angeordnet, während sich der Ultraschallkopf 2' oberhalb des Kabels 6 befindet. Der Ultraschallkopf 2 kann dabei einen reinen Ultraschallsender darstellen, während der Ultraschallkopf 2' ein reiner Empfänger sein kann oder vice versa. Bei der dargestellten Ausführungsform können die Ultraschallköpfe 2, 2' jedoch auch Ultraschallwandler darstellen.

Seitlich von dem Kabel 6 ist eine zusätzliche Messvorrichtung 16 zur Erfassung der Position der Seitenkante 17 des Kabels 6 angebracht. Es kann sich hier ebenfalls um einen Ultraschallkopf/Ultraschallwandler handeln. Mit Hilfe dieser zusätzlichen Messvorrichtung 10 wird der Abstand A von dieser Messvorrichtung 16 zur Seitenkante 17 des Kabels 6 bestimmt.

Beim Hin- und Herbewegen des Schlittens 11 und damit der Ultraschallköpfe 2, 2' wird die gesamte Breite des zu vermessenden Kabels 6 überstrichen und vermessen. Die dabei erhaltenen Ultraschall-Echos werden mit Hilfe eines Rechners verarbeitet. Dabei gehen auch die Werte ein, die an diesem Rechner durch die zusätzliche Messvorrichtung 16 und den Encoder für die Positionserfassung des Schlittens 11 geliefert werden. Daraus wird der Abstand B vom Ultraschallkopf 2, 2' zur zusätzlichen Messvorrichtung 16 unter zur Hilfenahme des Wertes für den Abstand A berechnet. Daraus ergibt sich der Abstand C der Ultraschallköpfe 2, 2' zur Seitenkante 17 des Kabels 6.

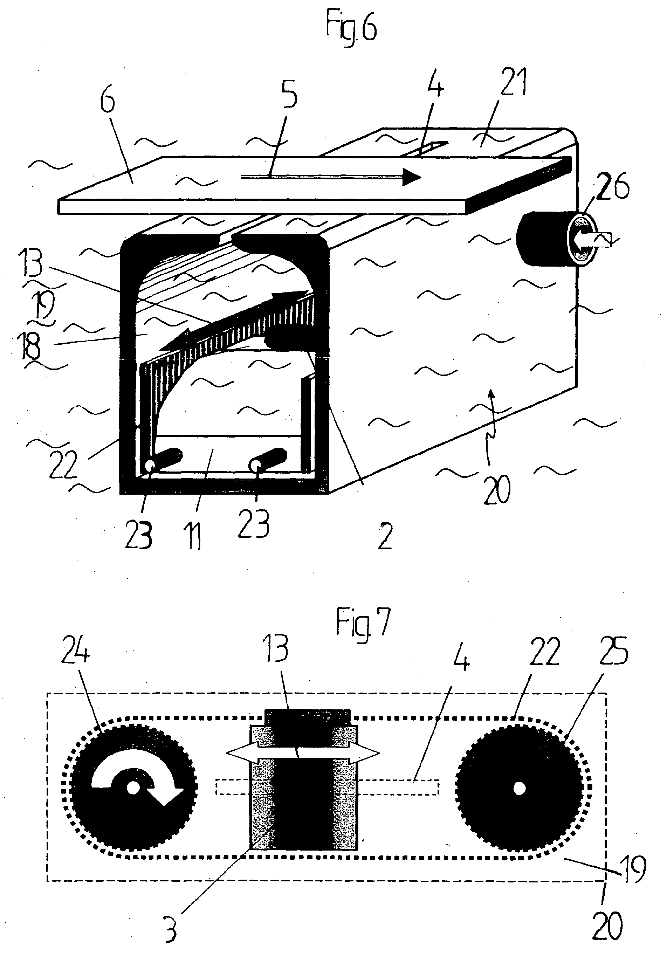

Bei der in der Figur 6 in perspektivischer Ansicht dargestellten Vorrichtung wird der Schlitten 11 im Innenraum 18 einer im Wasserbad 19 eingetauchten Führungseinrichtung 20 entsprechend der Richtung des Doppelpfeils 13 hin- und herbewegt. Diese Führungseinrichtung 20 besitzt in etwa Quaderform. In ihrer oberen horizontalen planen Seitenwand 21 ist ein Schlitz 4 ausgenommen, über den das Kabel 6 senkrecht gezogen wird und in etwa auf dieser Seitenwand 21 aufliegt. Die Zugrichtung bzw. Längsrichtung des Kabels 6 wird mit dem Pfeil 5 dargestellt.

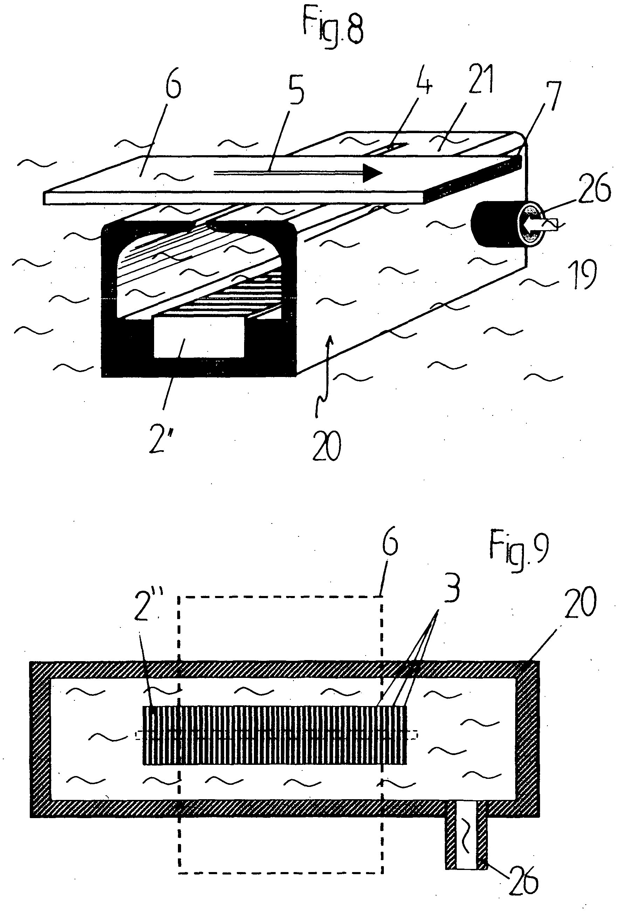

Der Schlitten 11 wird mit Hilfe von Führungsschienen 23 geführt und ist mit einem Zahnriemen 22 verbunden, der mit Hilfe eines angetriebenen Zahnrades 24 (man vergleiche Figur 7) hin- und herbewegt wird. Der Zahnriemen 22 wird durch ein nicht angetriebenes Zahnrad 25 umgelenkt.

Der Schlitten 11 besitzt oben einen Ultraschallkopf 2, der den Ultraschallimpuls in Richtung des Schlitzes 4 abstrahlt. Die Ultraschallwellen treten dann durch den Schlitz 4 durch, treffen auf das Kabel 6 und werden reflektiert. Die reflektierten Ultraschall-Echos treten dann wiederum durch den Schlitz 4 hindurch und werden von dem Ultraschallkopf 2 empfangen. Bei diesem Ultraschallkopf 2 handelt es sich somit im vorliegenden Fall um einen Ultraschallwandler.

Die Führungseinrichtung 20 besitzt seitlich einen Rohrstutzen 26, durch den Wasser zwangsweise mit Hilfe eines geeigneten Mittels, beispielsweise einer Pumpe (nicht gezeigt) in den Innenraum 18 der Führungseinrichtung 20 hineinbewegt wird. Dieses Wasser tritt dann durch den Schlitz 4 aus dem Innenraum 18 aus und bildet auf der horizontalen oberen Seitenwand 21 der Führungseinrichtung 20 ein Wasserkissen oder einen Wasserfilm aus, auf dem das Kabel 6 entlang gleitet und durch das der Abstand des Kabels 6 zur Oberfläche der oberen horizontalen Seitenwand 21 festgelegt wird. Es ist übrigens nicht unbedingt erforderlich, dass die obere Seitenwand 21 streng horizontal bzw. plan ist. Sie kann auch leicht nach außen gewölbt sein, wobei sich der Schlitz 4 dann am Scheitelpunkt dieser Wölbung befindet. Insgesamt ergibt sich dann, bezogen auf den Querschnitt, in etwa eine jochartige Form.

Die in den Figuren 8 und 9 gezeigte Ausführungsform entspricht hinsichtlich der Führungseinrichtung 20 in etwa derjenigen, die in den Figuren 6 und 7 gezeigt ist. Dabei sind gleiche Teile und Elemente mit den gleichen Bezugszeichen versehen, wobei dies nicht nur für diese beiden Ausführungsformen, sondern allgemein im Rahmen der vorliegenden Erfindung gültig ist.

Der Unterschied zu der in der Figur 6 gezeigten Ausführungsform besteht darin, dass bei der in den Figuren 8 und 9 gezeigten Ausführungsformen der Ultraschallkopf eine Ultraschall-Elementenzeile 2" ist, die nicht verschiebbar sondern stationär ist. Diese verfügt über mehrere nebeneinander quer zur Längsrichtung 5 angeordnete Ultraschallimpulse aussendende Elemente 3.

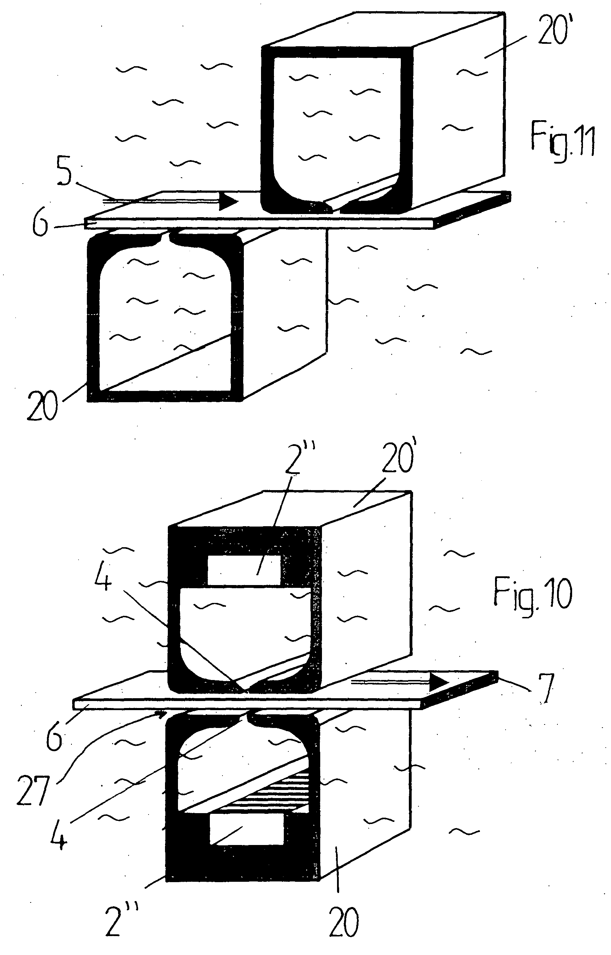

Bei den in den Figuren 6 bis 9 gezeigten Ausführungsformen stellen, sofern nichts anderes angeben ist, die Ultraschallköpfe 2, 2' und 2" Ultraschallwandler dar, die somit nicht nur einen Ultraschallimpuls abgeben, sondern auch das Ultraschallecho empfangen. Bei der in der Figur 10 dargestellten Ausführungsform, welche der in der Figur 8 gezeigten sehr ähnelt, sind zwei Führungseinrichtungen 20, 20' vorhanden, die mit ihren Schlitzen 4, 4' einander gegenüberliegend angeordnet sind, so dass das Kabel 6 durch den zwischen diesen beiden Führungseinrichtungen 20, 20' gebildeten Spalt 27 hindurchgezogen wird. Jede dieser Führungseinrichtungen 20, 20' ist mit einer Ultraschall-Elementenzeile 2" ausgestattet. In diesem Fall ist es möglich, dass beide Ultraschall-Elementenzeilen 2" auch Wandler sind. Ferner ist es möglich, dass eine dieser Ultraschall-Elementenzeilen 2" ein reiner Sender und die andere ein reiner Empfänger ist.

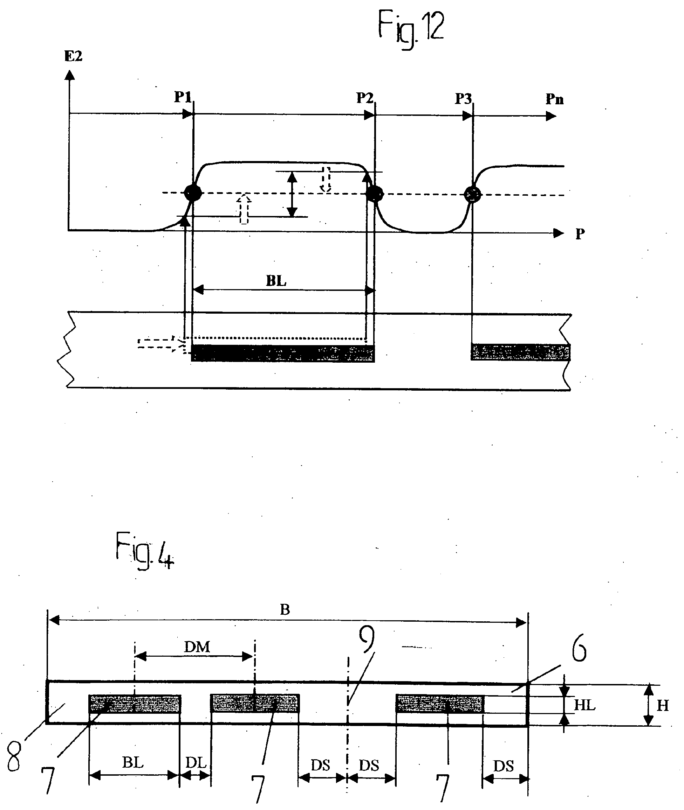

Die Führungseinrichtungen 20, 20' müssen im übrigen nicht einander gegenüberliegend angeordnet sein; vielmehr ist es auch möglich, diese Führungseinrichtungen in Längsrichtung 5 versetzt anzuordnen, wie dies in der Figur 11 dargestellt ist. Diese Führungseinrichtungen 20, 20' können sowohl einen verschiebbaren Ultraschallkopf als auch mit einer stationären Ultraschall-Elementenzeile je nach Erfordernis ausgestattet sein.

Es ist übrigens auch möglich, die oben beschriebenen Führungseinrichtungen 20, 20', die mit einem verschiebbaren Ultraschallkopf 2, 2' ausgestattet sind, derart auszuführen, dass die Führungseinrichtungen 20, 20' selbst quer verschiebbar sind und mit einem darin stationär angeordneten Ultraschallkopf 2, 2' ausgestattet sind, so dass auf diese Weise die Ultraschallköpfe 2, 2' wieder verschiebbar sind. Eine derartige Ausführungsform entspricht in etwa der in der Figur 5 gezeigten.

Die erfindungsgemäße Messvorrichtung 1 wird möglichst direkt nach der Extruderdüse 28 angeordnet, damit die erhaltenen Messergebnisse mit minimaler Zeitverzögerung zur Verfügung stehen. Diese Werte können dann für eine schnelle Regelung der Herstellungsparameter und somit beispielsweise von Wandstärke und Zentrizität der Leiter verwendet werden. All dies wird zweckmäßigerweise mit einer Rechnereinheit gesteuert.

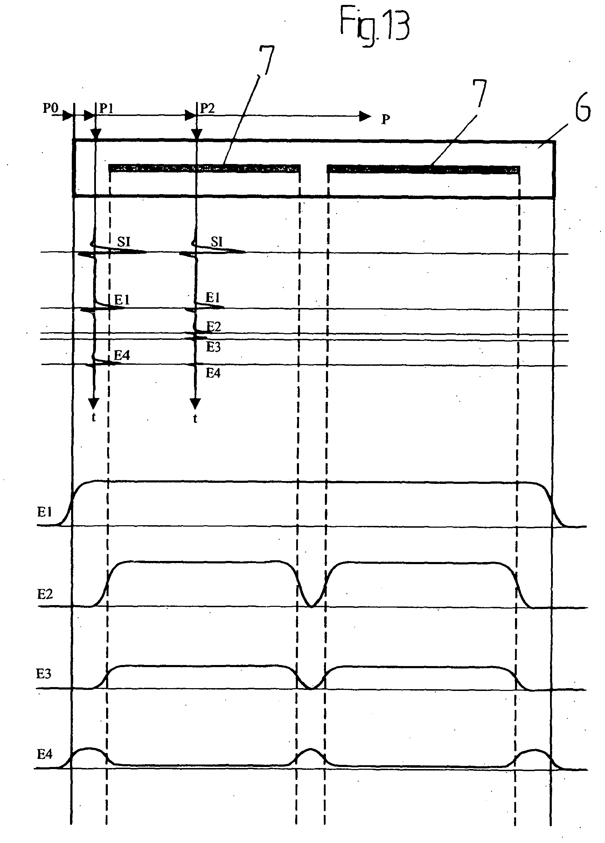

Mit Hilfe der erfindungsgemäß Vorrichtung 1 können verschiedene Parameter des zu vermessenden Kabels 6 bestimmt werden. So kann beispielsweise die Wandstärke anhand der Echos ermittelt werden, wenn der Ultraschallkopf über dem Flachleiter 7 steht. Ferner kann durch eine geeignete Analyse der Echowerte, wenn der Ultraschallkopf die Kanten der Leiter 7 überfährt, die Leiterbreite und die Leiterabstände ermittelt werden. Dies wird nachstehend beispielsweise anhand der Figuren 12 und 13 erläutert.

In der Figur 13 sind die Amplitudenverläufe der Ultraschall-Echos E1, E2, E3 und E4 für das oben in der Figur 13 gezeigte Kabel 6 wiedergegeben; diese Ultraschall-Echos E1 - E4 wurden bereits bei der Erläuterung der Figur 3 näher beschrieben. Sofern die Breite BL des Flachleiters 7 vor der Ultraschallmessung bekannt ist oder vor der Ummantelung vermessen wurde, ist es beispielsweise mit Hilfe des Ultraschall-Echos E2 möglich, die Triggerpunkte zur Bestimmung der Kanten des Flachleiters 7 zu ermitteln. Diese Situation ist in der Figur 12 dargestellt. Dazu wird die bekannte Breite BL des Flachleiters 7 dermaßen über dem Amplitudenverlauf des Ultraschall-Echos E2 zentriert, dass die durch Projektion ermittelten Triggerpunkte (in der Figur durch einen Kreis mit einem darin befindlichen Kreuz gekennzeichnet) den gleichen Amplitudenwert besitzen.

Nimmt man einmal an, dass das in der Figur 12 gezeigte Kabel 6 die durch die gestrichelte Linie kenntlich gemachte Position einnimmt, dann wird dieses Kabel rechnerisch soweit nach rechts verschoben, bis die Positionen P1 und P2 über den Triggerpunkten mit gleicher Amplitude liegen; diese Situation ist mit durchgezogenen Linien dargestellt. Hat man auf diese Weise die verschiedenen Triggerpunkte für die Flachleiter 7 bestimmt, dann kann man daraus auch rechnerisch deren Abstände ermitteln.

Obige Ausführung erläutern nur einige Auswertungen, die mit Hilfe der erfindungsgemäßen Vorrichtung und des erfindungsgemäßen Verfahrens vorgenommen werden können.

### Bezugszeichenliste

- 1: Vorrichtung
- 2, 2', 2": Ultraschallkopf bzw. Ultraschall-Elementenzeile
- 3: Element der Ultraschall-Elementenzeile
- 4, 4': Schlitz
- 5: Längsrichtung
- 6: Flachleiterkabel
- 7: Flachleiter
- 8,8': Isolationsschicht
- 9: Trennschnitt
- 10: Extruder
- 11: Schlitten
- 12: U-förmige Ausnehmung
- 13: Pfeil
- 14: Spindel
- 15: Antrieb
- 16: zusätzliche Messvorrichtung
- 17: Seitenkante
- 18: Innenraum
- 19: Wasserbad
- 20, 20': Führungseinrichtung
- 21: plane Seitenwand
- 22: Zahnriemen
- 23: Führungsschiene
- 24: Zahnrad, angetrieben
- 25: Zahnrad, nicht angetrieben
- 26: Rohrstutzen
- 27: Spalt
- 28: Extruderdüse
- 29: Trichter
- 30: Kühlbad

- E1: erstes Ultraschall-Echo
- E2: zweites Ultraschall-Echo
- E3: drittes Ultraschall-Echo
- E4: viertes Ultraschall-Echo
- t1: Echolaufzeit 1
- t2: Echolaufzeit 2
- t3: Echolaufzeit 3
- t4: Echolaufzeit 4
- BL: Breite Leiter
- HL: Höhe Leiter
- DL: Abstand der beiden zueinander zeigenden Seitenkanten von zwei Flachleitern
- DS: Abstand der benachbarten Seitenkante eines Flachleiters zum Trennschnitt oder zur Aussenkante des Kabels
- H: Höhe/Dicke des Flachleiterkabels
- B: Breite des Flachleiterkabels
- HL: Höhe/Dicke des Flachleiters
- DM: Abstand der Längsmittellinien zweier benachbarter Flachleiter

## Patentansprüche

1. Vorrichtung zur Messung mindestens eines Parameters eines extrudierten Flachleiterkabels (6) in einem Wasserbad (19) im Anschluss an den Extruder (19),
**dadurch gekennzeichnet,**
**dass** das Flachleiterkabel (6) mit einer seiner flachen Seiten im wesentlichen senkrecht über einen im Wasserbad (19) angeordneten Ultraschallkopf (2, 2', 2") geführt wird und
a) der Ultraschallkopf (2, 2') einen quer zur Längsrichtung (5) verschiebbar geführten Ultraschallkopf (2, 2') darstellt, oder
b) der Ultraschallkopf (2") eine sich quer zur Längsrichtung (5) des Flachleiterkabels (6) erstreckende, stationäre Ultraschall-Elementenzeile (2") darstellt.

2. Vorrichtung nach Anspruch 1,
**dadurch gekennzeichnet,**
**dass** der Ultraschallkopf (2, 2', 2") ein Ultraschallwandler (2, 2', 2") ist.

3. Vorrichtung nach Anspruch 1,
**dadurch gekennzeichnet,**
**dass** der Ultraschallkopf (2, 2') einen reinen Ultraschallsender darstellt, dem ein Ultraschallempfänger auf der anderen flachen Seite des Flachleiterkabels (6) gegenüberliegt.

4. Vorrichtung nach einem der vorhergehenden Ansprüche,
**dadurch gekennzeichnet,**
**dass** der verschiebbare Ultraschallkopf (2, 2') mit einem Positionsgeber ausgestattet ist.

5. Vorrichtung nach einem der vorhergehenden Ansprüche,
**dadurch gekennzeichnet,**
**dass** das Flachleiterkabel (6) mit seiner flachen Seite berührend oder in geringem Abstand über den Ultraschallkopf (2, 2', 2") geführt wird.

6. Vorrichtung nach einem der vorhergehenden Ansprüche 1 bis 4,
**dadurch gekennzeichnet,**
**dass** die Vorrichtung (1) mit einer einen Innenraum (18) besitzenden, im Wasserbad (19) befindlichen und mit Wasser gefüllten Führungseinrichtung (20, 20') ausgestattet ist,
die Führungseinrichtung (20, 20') mit einem Schlitz (4, 4') versehen ist, das Flachleiterkabel (6) berührend oder in geringem Abstand derart über den Schlitz (4, 4') geführt ist, dass sich der Schlitz (4, 4') quer zur Längsrichtung (5) erstreckt und
der Ultraschallkopf (2, 2', 2") im Innenraum der Führungseinrichtung (20, 20') angeordnet ist und die Ultraschallwellen in Richtung des Schlitzes (4, 4') abstrahlt.

7. Vorrichtung nach Anspruch 6,
**dadurch gekennzeichnet,**
**dass** die Führungseinrichtung (20, 20') im wesentlichen bis auf den Schlitz (4, 4') geschlossen ist und mit einer Öffnung oder einem Rohrstutzen (26) ausgestattet ist, durch die oder durch das Wasser zwangsweise in den Innenraum (18) der Führungseinrichtung (20, 20') eingeleitet wird.

8. Vorrichtung nach einem der vorhergehenden Ansprüche,
**gekennzeichnet durch**,
eine zusätzliche Messvorrichtung (16) zum Erfassen oder Vermessen einer Seitenkante (17) oder beider Seitenkanten (17) des Flachleiterkabels (6).

9. Vorrichtung nach einem der vorhergehenden Ansprüche,
**dadurch gekennzeichnet,**
**dass** der verschiebbare Ultraschallkopf (2, 2') oder die verschiebbaren Ultraschallköpfe (2, 2') dadurch verschiebbar ausgestaltet ist oder sind, dass er oder sie fest auf einem verschiebbaren Schlitten (11) befestigt oder in einer verschiebbaren Führungseinrichtung (20, 20') angeordnet ist oder sind.

10. Verfahren zur Messung mindestens eines Parameters eines extrudierten Flachleiterkabels, bei dem das Flachleiterkabel nach Austritt aus einem Extruder in einem Wasserbad vermessen wird,
**dadurch gekennzeichnet,**
**dass** das Flachleiterkabel auf mindestens einer seiner beiden flachen Seiten im wesentlichen senkrecht mit den Schallwellen mindestens eines Ultraschallkopfes beaufschlagt wird und
a) als Ultraschallkopf ein solcher eingesetzt wird, der quer zur Längsrichtung des Flachleiterkabels verschoben wird, oder
b) als Ultraschallkopf eine sich über die Breite des Flachleiterkabels erstreckende, stationäre Ultraschall-Elementenzeile eingesetzt wird, und
der zu messende Parameter oder die zu messenden Parameter an Hand eines reflektierten oder mehrerer reflektierter Ultraschall-Echos ermittelt wird oder werden.

11. Verfahren nach Anspruch 10,
**dadurch gekennzeichnet,**
**dass** das reflektierte Ultraschall-Echo als A-Scan bzw. als Amplitudenbild ausgewertet und in Funktion der Querrichtung des Flachleiterkabels dargestellt wird.

12. Verfahren nach Anspruch 10 oder 11,
**dadurch gekennzeichnet,**
**dass** eine oder mehrere der folgenden Maßnahmen durchgeführt werden:
a) als Ultraschallkopf wird ein Ultraschallwandler eingesetzt oder als Ultraschallkopf wird ein reiner Ultraschallsender eingesetzt, wobei dem reinen Ultraschallsender gegenüberliegend auf der anderen flachen Seite des Flachleiterkabels ein Ultraschallsensor eingesetzt wird,
b) der Ultraschallkopf wird bei der Messung quer zur Längsrichtung des Flachleiterkabels verschoben und seine Position bezüglich zur Referenzkante des Flachleiterkabels wird erfasst,
c) das Flachleiterkabel wird mit seiner flachen Seite berührend oder in geringem Abstand über den Ultraschallkopf geführt,
d) es wird eine Vorrichtung mit einer einen Innenraum besitzenden Führungseinrichtung eingesetzt, die mit einem Schlitz versehen ist, über den das Flachleiterkabel berührend oder in geringem Abstand derart geführt wird, dass sich der Schlitz quer zur Längsrichtung erstreckt, und bei der der Ultraschallkopf im Innenraum dieser Führungseinrichtung angeordnet ist und die Ultraschallwellen in Richtung des Schlitzes abstrahlt.
